# EUROPEAN PATENT APPLICATION

(11) **EP 4 447 274 A1**
(43) Date of publication of application: **16.10.2024**
(21) Application number: 23167566.1
(22) Date of filing: 12.04.2023
(51) Int. Cl.: H02K 1/276

(54) **MAGNET ARRANGEMENT FOR A ROTOR OF AN ELECTRIC MACHINE**

(71) Applicant: MAHLE International GmbH, 70376 Stuttgart (DE)
(72) Inventor: PISEK, Dr. Peter, 8435 Leitring (AT); SEVER, Dr. Peter, 9000 Murska Sobota (SI); SKUHALA, Damir, 9241 Verzej (SI)
(74) Representative: BRP Renaud & Partner mbB Rechtsanwälte Patentanwälte Steuerberater

(57) **Abstract**

The present invention relates to a magnet assembly (1) for a rotor (31) of an electric machine (30).

Increased efficiency and performance are achieved in that the magnet arrangement (1) has two permanent magnets (2, 3) which bear against one another via contact surfaces (4), the respective permanent magnet (2, 3) being extended trapezoidally on one end face (10).

The invention further relates to a method of manufacturing such a magnet assembly (1), a rotor (31) comprising such a magnet assembly, an electric machine (30) comprising such a rotor (31), and a motor vehicle (100) comprising such an electric machine (30).

## Description

The present invention relates to a magnet arrangement for a rotor of an electrical machine. The invention further relates to a method of manufacturing such a magnet arrangement. In addition, the invention relates to a rotor with at least one such magnet arrangement, an electrical machine with such a rotor and a motor vehicle with such an electrical machine.

An electric machine has a rotor and a stator which interact electromagnetically during operation. For this purpose, the rotor of the electric machine may have at least one permanent magnet per pole.

Corresponding electrical machines are known, for example, from
US 2018/0145552 A1 and EP 2 348 613 A1. In each case, one-piece permanent magnets are used, which are arranged at a distance from one another on the rotor in a rotationally fixed manner. In US 2018/0145552 A1, the permanent magnets are cuboidal in shape. EP 2 348 613 A1 shows one-piece permanent magnets which converge at their end faces.

The present invention is concerned with the problem of providing improved or at least other embodiments for a magnet arrangement for a rotor of an electrical machine, for a method for producing such a magnet arrangement, and for an electrical machine having such a rotor, and for a motor vehicle having such an electrical machine, which embodiments in particular eliminate disadvantages from the prior art. In particular, the present invention is concerned with the problem of providing embodiments for the magnet arrangement, for the method, for the rotor, for the electrical machine and for the motor vehicle which are characterized in particular by increased efficiency and/or increased performance.

This problem is solved according to the invention by the subjects of the independent claims. Advantageous embodiments are the subject of the dependent claims.

The present invention is based on the general idea of using in a rotor of an electric machine, instead of a one-piece permanent magnet per position, a magnet arrangement comprising two permanent magnets per position which rest on one another, the magnet arrangement being elongated in comparison with a cuboidal permanent magnet by means of an end face extending obliquely. The design and manufacture of the respective permanent magnet is simpler compared to the design and manufacture of an according one-piece permanent magnet. This leads to a simple manufacture and a simplified implementation of more complicated shapes. In addition, the two-part design allows an improved filling of the available space with magnetic material and thus leads to an improved efficiency of the corresponding electric machine. Furthermore, the magnet arrangement can be retained in a more effective way in the available space, in particular retained on a laminated sheets package of the rotor, leading to reduced stress in the lamination due to multitude of different bridge shapes/arrangements on the corresponding bridges. Due to the elongated structure of the magnet arrangement, in particular in comparison with a cuboidal structure, the magnetic field of the magnet arrangement is increased. As a consequence, a stronger electromagnetic interaction occurs during operation in an associated electrical machine. This leads to a further increased efficiency and an increased performance of the rotor as well as the associated electrical machine.

In accordance with the idea of the invention, the magnet arrangement thus comprises two permanent magnets, namely a first permanent magnet and a second permanent magnet. The respective permanent magnet has a contact surface and an outer surface facing away from the contact surface, which extend parallel in a direction. The direction is hereinafter also referred to as the longitudinal direction. The contact surface and the outer surface are spaced apart in a direction transverse to the longitudinal direction. The direction is also referred to hereinafter as the vertical direction. The contact surface has a length extending in the longitudinal direction, which is also referred to hereinafter as the contact length. The outer surface has a length extending in the longitudinal direction, which is also referred to hereinafter as the outer length. Here, in the respective permanent magnet, the contact length is greater than the outer length. The respective permanent magnet further has two end faces facing away from each other in the longitudinal direction. The end faces of the respective permanent magnet connect the associated contact surface to the associated outer surface. At least one of the end faces extends inwardly inclined relative to the longitudinal direction, so that the permanent magnet has a trapezoidal like shape in the region of the end face. The contact surfaces of the permanent magnets abut on each other.

In the following, the "trapezoidal shape" or "trapezoidally inclined" correspond to the trapezoidal like shape in the region of the associated end face.

Each permanent magnet preferably has a frustum like shape. Preferably each permanent magnet is shaped as a square frustum.

Each permanent magnet is a magnet body, wherein the bodies are placed against each other at their contact surfaces.

The permanent magnets of the magnet assembly are preferably manufactured separately and then placed against each other at their contact surfaces.

The permanent magnets are arranged with regard to their magnetic poles in such a way that the magnet arrangement has the same polarity as a corresponding one-piece permanent magnet. Accordingly, in the following, identically formed or designed means the corresponding form of the permanent magnets or magnet arrangement and does not necessarily also refer to the magnet poles.

The respective permanent magnet preferably has two side surfaces facing away from each other in a transverse direction, which extend in the longitudinal direction. The transverse direction extends transversely to the longitudinal direction and transversely to the vertical direction. The side surfaces of the respective permanent magnet thereby connect the contact surface and the outer surface of the associated permanent magnet to one another. In addition, the side surfaces advantageously connect the end faces of the associated permanent magnet to one another.

The directions indicated with respect to the permanent magnets, i.e. the longitudinal direction, the vertical direction and the transverse direction, each apply to the associated permanent magnet. In the magnet arrangement, these directions coincide. This means that the longitudinal direction and of both permanent magnets, the vertical direction of both permanent magnets and the directions of rotation of both permanent magnets correspond to each other respectively.

In principle, the two permanent magnets of the magnet arrangement can have different shapes, in particular different sizes.

In preferred embodiments, the contact surfaces of the permanent magnets are of the same design. This results in simplified manufacture of the magnet arrangement and/or improved packaging in the associated rotor.

Preferably, the contact surfaces of the permanent magnets completely overlap in the transverse direction.

Each permanent magnet, in particular each surface and/or face, can have an arbitrary shape. In particular, at least one of the permanent magnets can have an asymmetric shape.

In preferred embodiments, the permanent magnets have the same shape. In particular, this means that the shapes of the two permanent magnets correspond to each other. As a consequence, the manufacture of the magnet arrangement is simplified and/or cost reduced. In addition, the magnet arrangement can be formed symmetrically in a simplified manner in this way.

In principle, only one of the end faces of the respective permanent magnet can be trapezoidally inclined inwards.

In preferred embodiments, both end faces of at least one of the permanent magnets, preferably of the respective permanent magnet, are inclined inwardly relative to the longitudinal direction so that both end faces of the permanent magnet are trapezoidally shaped.

In principle, the contact surface and the outer surface of at least one of the permanent magnets may be offset from each other in the longitudinal direction and/or in the transverse direction.

Preferably, the contact surface and the outer surface of at least one of the permanent magnets, preferably of the respective permanent magnet, are centered relative to each other in the longitudinal direction, preferably further in the transverse direction. That is, the outer surface is centered relative to the contact surface in the longitudinal direction, preferably further in the transverse direction.

Advantageously, at least one of the permanent magnets, preferably the respective permanent magnet, is formed symmetrically, i.e. shaped, with respect to a symmetry plane extending centrally in the longitudinal direction and along the vertical direction. For this purpose, preferably both end faces of the permanent magnet are inclined inwardly with respect to the longitudinal direction. For this purpose, advantageously further, the outer surface is arranged centrally with respect to the contact surface in the longitudinal direction, preferably further in the transverse direction. If both permanent magnets are formed identically and the two contact surfaces overlap completely, this symmetry also applies to the magnet arrangement.

It is conceivable that the contact surfaces of the permanent magnets are in contact with each other but offset, for example in the longitudinal direction.

It is conceivable and preferred if the contact surfaces of the permanent magnets completely overlap.

In preferred embodiments, the magnet arrangement is symmetrical with respect to a plane of symmetry of the arrangement extending between the contact surfaces and parallel to the contact surfaces.

The side faces of the respective permanent magnet can in principle be of any shape.

Preferred are embodiments in which the side surfaces of at least one of the permanent magnets, preferably of the respective permanent magnet, extend parallel in the vertical direction. This results in a shape of the permanent magnet with a cuboid-shaped base which is extended in the longitudinal direction by the trapezoidal region shaped by the at least one end face. This results in a simplified and cost-effective production of the permanent magnets and thus the magnet arrangement.

For the production of the permanent magnets, a cuboid-shaped magnetic magnet bar is preferably divided into successive permanent magnets by correspondingly oblique cuts. Also, at least two magnetic cuboid-shaped magnet bar can be arranged adjacent to one other to form a bar arrangement. The arrangement is divided into successive permanent magnets by correspondingly oblique cuts. Thus, no or at least reduced residues of the magnet bar are produced during the manufacture of the permanent magnets. This leads to reduced manufacturing costs and simplified production.

Consequently, it is preferred that at least one cuboid-shaped magnet bar is provided for producing the magnet arrangement, which magnet bar extends longitudinally in longitudinal direction. Alternating first cuts and second cuts are made in the at least one magnet bar, spaced apart from each other in the longitudinal direction. The first cuts and the second cuts are inclined relative to the longitudinal direction and are opposed to each other. Thus, a permanent magnet of the magnet assembly is produced by each two successive cuts in the respective at least one magnet bar. That is, spatially successive cuts are made to form the permanent magnets. To manufacture the magnet assembly, the contact surface of a first one of the permanent magnets and a second one of the permanent magnets are placed abutting on each other, in particular attached.

In case two or more magnet bars are used, the magnet bars are preferably arranged adjacent one another vertically and thus transverse to the longitudinal direction.

The successive cuts may be made subsequently or simultaneously.

It is understood that the method of making the magnet assembly is also within the scope of the present invention.

The scope of the present invention also includes a rotor for an electric machine having at least one such magnet assembly.

The rotor comprises a shaft which, in operation, rotates about an axis of rotation which extends axially. The rotor further comprises at least one such magnet arrangement which is non-rotatable and thus torque proof with respect to the shaft.

The respective magnet arrangement can be arranged in any desired manner with respect to the shaft, i.e. can extend in any desired manner relative to the shaft.

In particular, it is conceivable that the longitudinal direction of at least one of the magnet arrangements extends transversely or inclined to the axis of rotation.

Advantageously, the rotor has at least two such magnet arrangements. Preferably, the magnet arrangements are spaced apart from each other. In particular, at least two such magnet arrangements are spaced apart from each other surrounding the axis of rotation.

Advantageously, the magnet arrangements are inclined or transverse relative to each other. In particular, the longitudinal direction of the magnet arrangements is inclined or transverse to each other.

The non-rotatable attachment of the magnet arrangement in the rotor is advantageously realized via the at least one end face. Thus, in particular in comparison with a magnet of a cuboidal design, an enlarged surface is available for the rotationally fixed attachment to the shaft. This leads to a simplified manufacture of the rotor as well as a more stable, rotationally fixed connection of the magnet arrangement. It is conceivable that the magnet arrangement is attached to the lamination of the rotor via the end faces.

The rotor is used in an electric machine. In the electric machine, the rotor interacts electromagnetically with a stator. During operation, the interaction leads to a rotation of the rotor around the axis of rotation.

It is clear that the electrical machine is also within the scope of the present invention.

In the electrical machine, the rotor is advantageously arranged inside the stator. The electrical machine is thus in particular an "Interior Permanent Magnet Machine", also known as an "IPM Machine".

The electric machine is preferably an electric motor.

The electric machine, especially the electric motor, can be used for any purpose.

It is particularly the electric motor can be designed as a traction motor. The electric motor is therefore used in particular for driving.

In particular, it is conceivable to use the electric machine in a motor vehicle. It is clear that the motor vehicle with such an electric machine is also within the scope of the present invention.

In the motor vehicle, the electric machine can serve any purpose.

It is possible to use the electric machine as an electric motor to drive the motor vehicles, i.e. as a traction motor.

Other important features and advantages of the invention will be apparent from the sub-claims, from the drawings and from the accompanying figure description with reference to the drawings.

It is understood that the above features, and those to be explained below, may be used not only in the combination indicated in each case, but also in other combinations or alone, without departing from the scope of the present invention.

Preferred embodiments of the invention are shown in the drawings and will be explained in more detail in the following description, wherein like reference signs refer to like or similar or functionally identical components.

It shows, schematically in each case
- Fig. 1: a side view of a magnet arrangement with two permanent magnets,
- Fig. 2: the side view from figure 1 in exploded view,
- Fig. 3: a side view of the magnet assembly in another embodiment,
- Fig. 4: a side view of the magnet assembly in a further embodiment,
- Fig. 5: a side view during the manufacture of the magnet assembly,
- Fig. 6: a highly simplified sectional view of a rotor in an electrical machine,
- Fig. 7: a sectional view of the rotor in the area of magnet arrangements,
- Fig. 8: a highly simplified, circuit diagram-like representation of a motor vehicle with the electric machine,
- Fig. 9: a side view during the manufacture of the magnet assembly in another exemplary embodiment.

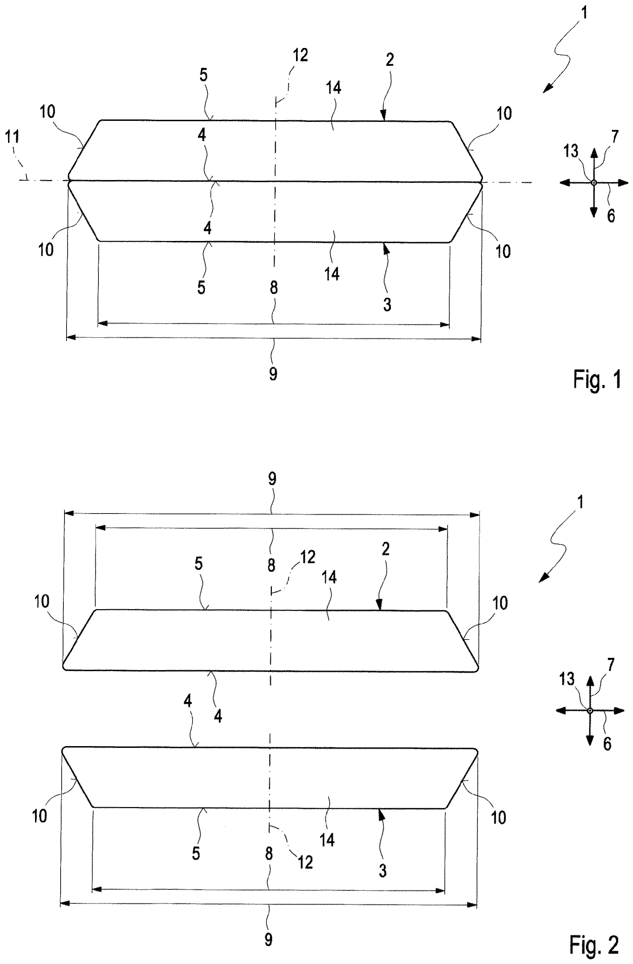

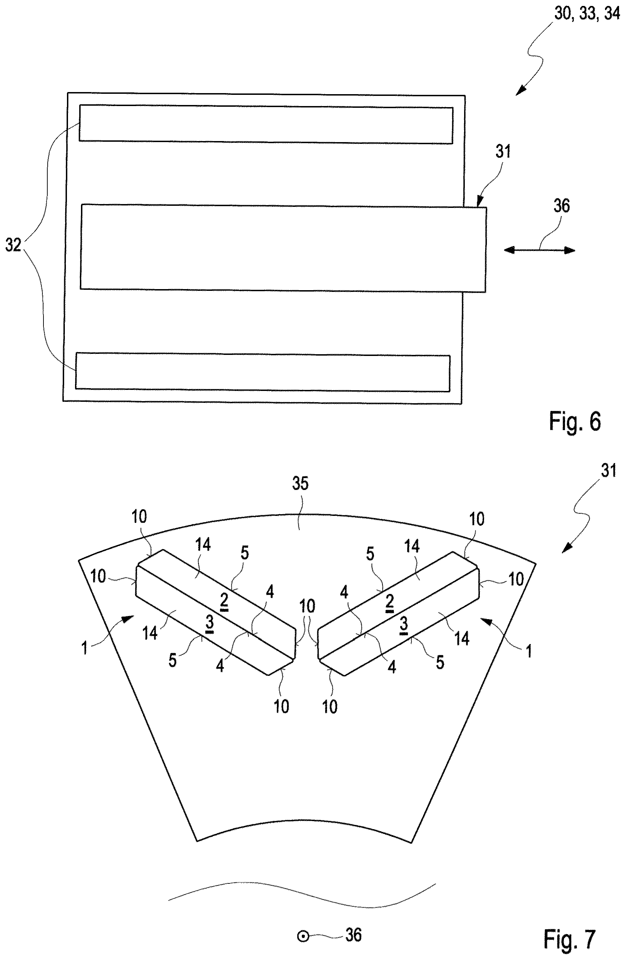

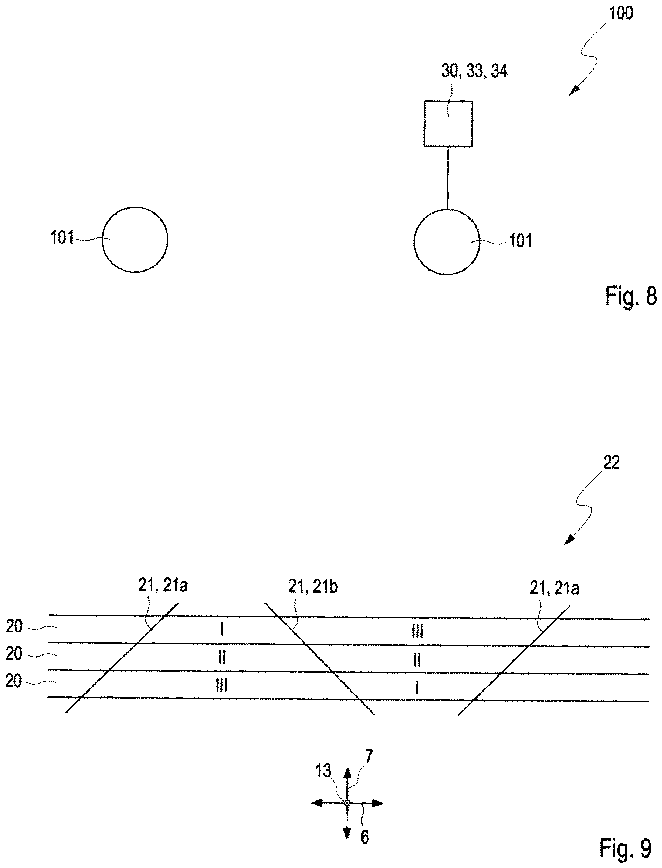

A magnet arrangement 1, as exemplary shown in Figures 1 to 4 and 6, is used in a rotor 31, which is exemplary shown in Figures 6 and 7. The rotor 31 is used in an electric machine 30 exemplary shown in Figures 6 and 7. The electric machine 30 may be used in a motor vehicle 100 exemplary shown in Figure 8.

The magnet arrangement 1 is hereinafter also referred to as arrangement 1 for short. The arrangement 1 comprises 2 permanent magnets 2, 3, namely a first permanent magnet 2 and a second permanent magnet 3. In particular, the arrangement 1 is composed of the permanent magnets 2, 3. As can be taken seen in Figures 1 and 2, for example, the following applies to the respective permanent magnet 2, 3. The respective permanent magnet 2, 3 has a contact surface 4, wherein the contact surfaces 4 of the permanent magnets 2, 3 abut on each other. The respective permanent magnet 2, 3 further comprises an outer surface 5 facing away from the associated contact surface 4. The contact surface 4 and the outer surface 5 extend in parallel in a direction 6, which will also be referred to hereinafter as longitudinal direction 6. Moreover, the contact surface 4 and the outer surface 5 are spaced apart from each other in a direction 7 extending transversely to the longitudinal direction 6. The direction 7 is hereinafter also referred to as the vertical direction 7. As can be seen, for example, from Figure 1, the outer surface 5 and the contact surface 4 each have a length 8, 9 extending in the longitudinal direction 6. The length 8 of the outer surface 5 is hereinafter also referred to as the outer length 8. The length 9 of the contact surface 4 is also referred to hereinafter as the contact length 9. The contact length 9 is greater than the outer length 8. That is, the contact surface 4 is greater in the longitudinal direction 6 than the outer surface 5. As can further be seen from Figures 1 and 2, the permanent magnet 2, 3 has two surfaces 10 facing away from each other in the longitudinal direction 6. The surfaces 10 are hereinafter also referred to as end faces 10. The respective end faces 10 connect the contact surface 4 and the outer surface 5 to each other. At least one of the end faces 10 extends inwardly inclined relative to the longitudinal direction 6, so that the permanent magnet 2, 3 is shaped trapezoidally in the region of the end face 10. This results in a trapezoidal shape in the side views shown in Figures 1 to 4 and 6, or in a section along the longitudinal direction 6. Thus, a larger volume compared to a cuboid magnet results, so that the rotor 31 with the magnet arrangement 1 has an improved electromagnetic performance.

As can be seen from Figures 1 to 4 and 6, in the shown exemplary embodiments the contact surfaces 4 of the permanent magnets 2, 3 of the magnet arrangement 1 are formed identically. In the shown exemplary embodiments, both permanent magnets 2, 3 of the magnet arrangement 1 are formed identically in shape and have corresponding polarities, so that the magnet arrangement 1 is polarized in the manner of a one-piece permanent magnet (not shown).

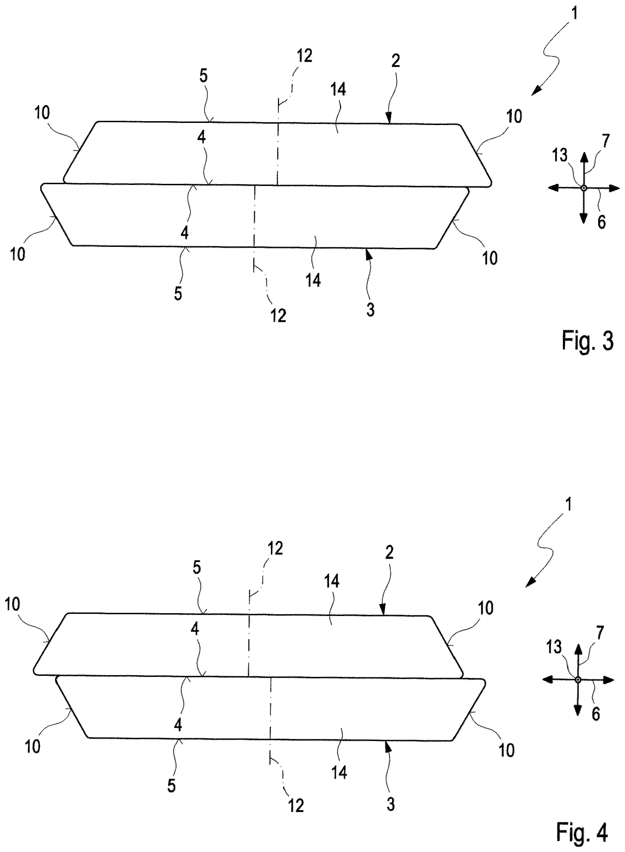

As can be seen from Figures 1 and 2 as well as 6, it is conceivable that the contact surfaces 4 abut on each other and completely overlap. As can be seen from Figures 3 and 4, it is also possible that the contact surfaces 4 abut on each other and are offset from each other. In the exemplary embodiment of Figures 3 and 4, the contact surfaces 4 are offset from each other in the longitudinal direction 6.

In the exemplary embodiments shown, both end faces 10 of the respective permanent magnets 2, 3 of the magnet arrangement 1 are inclined inwardly, so that a trapezoidal shape is obtained in the region of both end faces 10. Moreover, in the exemplary embodiments shown, the outer surface 5 is arranged centrally with respect to the contact surface 4 in the longitudinal direction 6. Thus, a symmetrical configuration of the permanent magnet 2, 3 results with respect to a symmetry plane 12 of the respective permanent magnet 2, 3 extending centrally in the longitudinal direction 6 and running in the vertical direction 7. In the exemplary embodiment of Figures 1 and 2, the symmetry plane 12 is also a symmetry plane 12 of the magnet arrangement 1. In this exemplary embodiment, the magnet arrangement 1 comprises a further symmetry plane 11 extending between the contact surfaces 4 and parallel to the contact surfaces 4. In other words, the magnet arrangement 1 is symmetrical with respect to the symmetry plane 11 of the arrangement 1 extending between the contact surfaces 4 and parallel to the contact surfaces 4.

The respective permanent magnet 2, 3 has two side faces 14 extending in the longitudinal direction 6 and facing away from each other in a transverse direction 13 extending transversely to the longitudinal direction 6 and transversely to the vertical direction 7. In the Figures shown due to the side views of the respective magnet arrangement 1, only one of the side surfaces 14 is visible. The side surfaces 14 of the respective permanent magnet 2, 3 each connect the contact surface 4 to the outer surface 5. In the exemplary embodiments shown, the side surfaces 14 extend parallel in the vertical direction 7. Thus, with the exception of the regions of the end faces 10, the respective permanent magnet 2, 3 is cuboidal in shape.

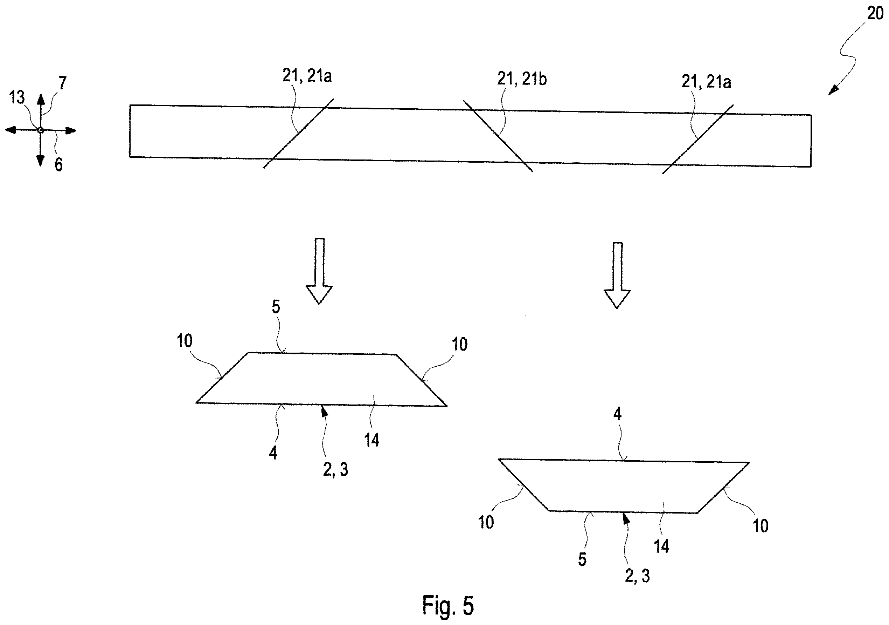

The magnet arrangement 1 can be manufactured in a simplified manner as shown in Figures 5 and 9. For this purpose, at least one cuboid-shaped magnet bar 20 is provided, which extends longitudinally in longitudinal direction 6. As indicated by lines in Figures 5 and 9, cuts 21 are made in the at least one magnet bar 20 at intervals from one another in the longitudinal direction 6. More specifically alternating first cuts 21, 21a and second cuts 21, 21b are made in the at least one magnet bar 20 spaced apart from each other in the longitudinal direction 6. As can be seen from Figures 5 and 9, the first cuts 21, 21a and second cuts 21, 21b are inclined relative to the longitudinal direction 6 and run in opposite directions to each other. Consequently, a permanent magnet 2, 3 of the magnet arrangement 1 is manufactured by two spatially successive cuts 21 in the longitudinal direction 6. The successive cuts 21 can be made subsequently or simultaneous. To produce a magnet arrangement 1, a first permanent magnet 2 and a second permanent magnet 3 are attached to each other with their contact surfaces 9.

In the exemplary embodiment shown in Figure 5, the cuts 21 are made in a single magnet bar 20. As Figure 5 shows, in this embodiment the successive cuts 21, by way of example, are placed symmetrically. As a result, al the permanent magnets 2, 3 have the same shape and size.

In the exemplary embodiment shown in Figure 9, at least two cuboid-shaped magnet bars 20 are vertically arranged adjacent one another to form a bar arrangement 22. The is, the bar arrangement 22 comprises at least two magnet bars 20 adjacent one another to transverse to their longitudinal extension. The first cuts 21, 21a and second cuts 21, 21b are made in the bar arrangement 22 at intervals from one another in the longitudinal direction 6 and thus successively, so that a permanent magnet 2, 3 of the magnet arrangement 1 is produced by the successive cuts 21 in the respective magnet bar 20. In this embodiment permanent magnets 2, 3 of different shapes and sizes are produced. As indicated in Figure 9, in this embodiment the successive cuts 21, by way of example, are placed symmetrically using identical magnet bars 20. As a result, different shapes of permanent magnets 2, 3 are achieved, wherein at least two groups of permeant magnets 2, 3 are produced, and wherein the permanent magnets 2, 3 of each group have the same shape and size. In the shown embodiment having three adjacent magnet bars 20, three such groups are produced. The groups are indicated with the romans numbers I, II, III in this Figure, meaning the permeant magnets 2, 3 of groups I have each the same shape and size, the permeant magnets 2, 3 of groups II have each the same shape and size and the permeant magnets 2, 3 of groups III have each the same shape and size. Here, the shape and size of the permanent magnets 2, 3 of the different groups I, II, III differ.

Referring to Figures 6 and 7, the rotor 31, in operation, rotates about an axial axis of rotation 36. As shown only in Figure 7, the rotor 31 comprises a lamination 35. The lamination 35 is non-rotatably attached to the rotor 31 and thus torque proof with the rotor 31. As also shown in Figure 7 only, at least one such magnet arrangement 1 is non-rotatably attached to the lamination 35 and thus to the rotor 3. In the exemplary embodiment shown, the rotor 31 has at least two such magnet arrangements 1. The magnet arrangements 1 are spaced apart from one another and, preferably evenly, surrounding the axis of rotation 36. In the view shown in Figure 7 two of the magnet arrangements 1 can be seen in a V configuration. As can be seen from Figure 7, the longitudinal directions 6 of the magnet arrangements 1 are inclined to each other and transverse or inclined to the axis of rotation 36. In the exemplary embodiment shown in Figure 7, magnet arrangements 1 of the exemplary embodiment shown in Figure 1 are used by way of example. Of course, at least one magnet arrangement 1 of the exemplary embodiment of Figure 3 and/or of the exemplary embodiment of Figure 4 can also be used. In the rotor 31 of the exemplary embodiment shown, the respective magnet arrangement 1 is laminated into the rotor 31 via the end faces 10 wherein the air pockets/magnet barriers are not shown for the clarity of the picture.

The electrical machine 30 with the rotor 31 further comprises a stator 32. The stator 32 surrounds the rotor 31 in the shown exemplary embodiment. In operation, the stator 32 interacts electromagnetically with the rotor 31, in particular with the at least one magnet arrangement 1. The interaction is such that the rotor 31 rotates about the axis of rotation 36. Advantageously, the electric machine 30 is an electric motor 33. The electric motor 33 may be used for propulsion, i.e. may be a traction motor 34.

According to Figure 8, the electric machine 30, in particular the electric motor 33, can be used in a motor vehicle 100. In this context, the electric motor 33 may serve to drive the motor vehicle 100, i.e. it may be a traction motor 34. To this end, as indicated in Figure 8, the traction motor 34 drives at least one wheel 101 of the motor vehicle 100.

## Claims

1. A magnet assembly (1) for a rotor (31) of an electric machine (30),
- with a first permanent magnet (2) and a second permanent magnet (3),
- wherein the respective permanent magnet (2, 3):
• has a contact surface (4) and an outer surface (5) facing away from the contact surface (4), which surfaces (4, 5) extend parallel in a longitudinal direction (6) and are spaced apart from one another in a vertical direction (7) extending transversely to the longitudinal direction (6),
• the outer surface (5) has an outer length (8) extending in the longitudinal direction (6) and the contact surface (4) has a contact length (9) extending in the longitudinal direction (6) which is greater than the outer length (8),
• has two end faces (10) facing away from one another in the longitudinal direction (6), which in each case connect the contact face (4) and the outer face (5) to one another,
• at least one of the end faces (10) is inclined inwardly relative to the longitudinal direction (6) so that the permanent magnet (2, 3) has a trapezoidal like shape in the region of the end face (10),
- wherein the contact surfaces (4) of the permanent magnets (2, 3) abut on each other.

2. Magnet arrangement according to claim 1,
**characterized in that**
the contact surfaces (4) of the permanent magnets (2, 3) are of the same design and in particular completely overlap.

3. Magnet arrangement according to claim 1 or 2,
**characterized in that**
the permanent magnets (2, 3) are of the same design.

4. Magnet arrangement according to one of the claims 1 to 3,
**characterized in that**
the magnet arrangement (1) is symmetrical with respect to a symmetry plane (11) of the arrangement (1) extending between the contact surfaces (4) and parallel to the contact surfaces (4).

5. Magnet arrangement according to any one of claims 1 to 4,
**characterized in that**
both end faces (10) of at least one of the permanent magnets (2, 3) are inclined inwardly relative to the longitudinal direction (6) so that both end faces (10) of the permanent magnet (2, 3) are trapezoidally shaped.

6. Magnet arrangement according to claim 5,
**characterized in that**
the outer surface (5) is arranged centrally in the longitudinal direction (6) relative to the contact surface (5), so that the permanent magnet (2, 3) is formed symmetrically with respect to a symmetry plane (12) of the permanent magnet running centrally through the contact surface (4) and in the vertical direction (7).

7. Magnet arrangement according to one of claims 1 to 6,
**characterized in that**
at least one of the permanent magnets (2, 3) has two side faces (14) which run in the longitudinal direction (6) and face away from one another in a transverse direction (13) running transversely with respect to the longitudinal direction (6) and transversely with respect to the vertical direction (7), which side faces (14) connect the contact face (4) to the outer face (5) and extend parallel in the vertical direction (7).

8. Magnet arrangement according to one of claims 1 to 7,
**characterized in that**
the contact surfaces (6) abut on each other and completely overlap.

9. Magnet arrangement according to one of claims 1 to 7,
**characterized in that**
the contact surfaces (6) abut on each other and are offset from each other.

10. A method of manufacturing a magnet assembly (1) according to any one of claims 1 to 9,
- wherein at least one cuboid-shaped magnet bar (20) is provided which extends longitudinally in longitudinal direction (6),
- wherein alternating first cuts (21, 21a) and second cuts (21, 21b), which are inclined relative to the longitudinal direction (6) and directed in opposite directions to one another, are made in the at least one magnet bar (10) at intervals from one another in the longitudinal direction (6), so that a permanent magnet (2, 3) of the magnet arrangement (1) is produced by successive cuts (21) in the respective magnet bar (20),
- wherein a first permanent magnet (2) and a second permanent magnet (3) are attached to each other with their contact surfaces (9) and thus the magnet arrangement (1) is produced.

11. Method according to claim 10,
**characterized in that**
- at least two cuboid-shaped magnet bars (20) are arranged adjacent one vertically to form a bar arrangement (22),
- the alternating first cuts (21, 21a) and second cuts (21, 21b) are made in the bar arrangement at intervals from one another in the longitudinal direction (6), so that a permanent magnet (2, 3) of the magnet arrangement (1) is produced by successive cuts (21) in the respective magnet bar (20).

12. Rotor (31) for an electric machine (30),
- with a lamination (35) which rotates in operation about an axial axis of rotation (36),
- with at least one magnet arrangement (1) according to any one of claims 1 to 9, which is attached to the lamination (35) in a rotationally fixed manner.

13. Rotor according to claim 12,
**characterized in that**
the longitudinal direction (6) extends transversely or inclined to the axis of rotation (36).

14. Rotor according to claim 12 or 13,
**characterized in that**
at least two such magnet arrangements (1) are mounted on the rotor (31), which magnet arrangements (1) are spaced apart from each other surrounding the axis of rotation (36).

15. Rotor according to any one of claims 12 to 14,
**characterized in that**
at least one of the at least one magnet arrangements (1) is laminated in the rotor (31) via the end faces (10).

16. An electric machine (30), in particular an electric motor (33), comprising a rotor (31) according to any one of claims 12 to 15 and a stator (32) which electromagnetically cooperates with the rotor (31) during operation.

17. An electric machine according to claim 16,
**characterized in that**
the electric machine (30) is configured as a traction motor (34).

18. Motor vehicle (100) comprising an electric machine (30) according to claim 16 or 17.
